# EUROPEAN PATENT APPLICATION

(11) **EP 2 065 810 A2**
(43) Date of publication of application: **03.06.2009**
(21) Application number: 08168436.7
(22) Date of filing: 06.11.2008
(51) Int. Cl.: G06F 17/30

(54) **Method and system for displaying and accessing music data files**

(30) Priority: 20.11.2007 US 986252
(71) Applicant: Delphi Technologies, Inc., Troy, Michigan 48007 (US)
(72) Inventor: Toms, Mona L., Carmel, IN 46032 (US); Sencaj, Randall W., Carmel, IN 46032 (US); Wagner, Paul T., Kokomo, IN 46902 (US)
(74) Representative: Denton, Michael John

(57) **Abstract**

A media system (10) and method (100) of accessing music data files are provided. The media system (10) includes a memory storage device (12), wherein a plurality of music data files are accessed based upon classifications that correspond to a plurality of categories that have a successive relationship to one another. A processor (18) performs the steps including selecting (104) a first category, selecting (106) at least a portion of the music data files based upon the first category, and displaying (108) at least one classification that corresponds to the first category. The processor (18) further performs the steps of receiving a command (110) to select one of the displayed classifications, selecting (112) at least a portion of the music data files based upon the selected classification and a second category, and displaying (114) at least one classification associated with the selected music data files, wherein the displayed classification is based upon the first category, the second category, and the selected classification.

## Description

### Technical Field

The present invention generally relates to a method and system for generating music playlists, and more particularly, a method and system for displaying and accessing music data files.

### Background of the Invention

Generally, music data files are selected based upon a name or associated data with which they are stored. Typically, a user can be required to navigate through the stored data in a predetermined set of steps based upon the algorithm in order to recall the desired music selection.

In addition, devices that select the stored data files generally have a predetermined format and algorithm for selecting a desired data file. A user of the device typically must navigate through the same menu algorithm every time a data file is to be selected.

### Summary of the Invention

According to one aspect of the present invention, a method of accessing music data files having multiple classifications includes the steps of providing a plurality of music data files selected based upon a plurality of classifications that correspond to a plurality of categories having a successive relationship to one another. The method further includes the steps of displaying at least one of the plurality of classifications associated with the selected music data files that corresponds to the first category, receiving a command to select at least one of the displayed classifications, selecting at least a portion of the plurality of music data files based upon the selected classification and a second category of the plurality of categories that is any one of the plurality of categories below the first category in the successive relationship of the plurality of categories, and displaying at least one of the plurality of classifications associated with the selected music data files, wherein the displayed classifications are based upon the first category, the second category, and the selected classification.

According to another aspect of the present invention, a media system that executes at least one software routine includes a memory storage device or communications hardware that accesses a remote storage device, a screen, and a processor that acts upon the software algorithm A plurality of music data files are selected from the memory storage device based upon a plurality of classifications that correspond to a plurality of categories. The plurality of categories have a successive relationship to one another. The screen displays at least one of the plurality of classifications that corresponds to at least one of the plurality of music data files. The processor is in communication with the memory storage device, and performs the steps including selecting a first category of the plurality of categories, and displaying at least one of the plurality of classifications associated with the selected music data files on the screen that corresponds to the first category. The processor further performs the steps of receiving a command to select at least one of the displayed classifications, selecting at least a portion of the plurality of music data files based upon the selected classification and a second category of the plurality of categories that is any one of the plurality of categories below the first category in the successive relationship of the plurality of categories, and displaying at least one of the plurality of classifications associated with the selected music data files, wherein the displayed classifications are based upon the first category, the second category, and the selected classification.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
Fig. 1 is a schematic diagram of a media system, in accordance with one embodiment of the present invention;
Fig. 2 is a flow chart illustrating a method for accessing music data files, in accordance with one embodiment of the present invention;
Fig. 3 is an illustration of a main menu screen that is displayed on a screen of a media system, in accordance with one embodiment of the present invention;
Fig. 4 is an illustration of a screen display, wherein a genre category is selected, in accordance with one embodiment of the present invention;
Fig. 5 is an illustration of a screen, wherein an artist category is selected, in accordance with an embodiment of the present invention;
Fig. 6 is an illustration of a screen, wherein an album category is selected, in accordance with one embodiment of the present invention; and
Fig. 7 is an illustration of a screen, wherein a song category is selected, in accordance with one embodiment of the present invention.

### Description of Preferred Embodiments

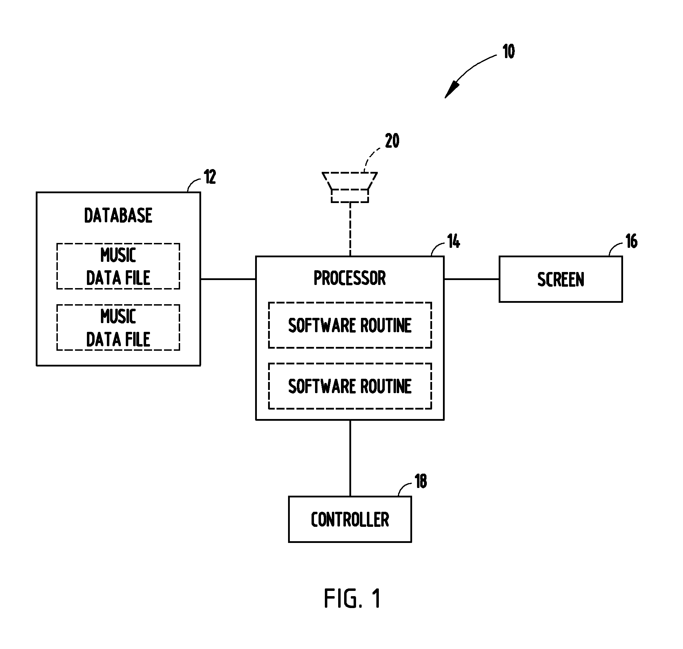

In reference to Fig. 1, a media system is generally shown at reference identifier 10. The media system 10 includes a memory storage device 12, a processor 14, and a screen 16, according to one embodiment. At least a portion of a plurality of music data files are accessed or selected from the memory storage device 12 based upon a plurality of classifications assigned to each of the plurality of music data files. According to one embodiment, the classification of a music data file is an ID3 tag of an MPEG-3 file (MP3) or the like, which generally is a section of the file that contains metadata. Thus, the music data file can be, but is not limited to, an MP3, a WMA, or the like. The plurality of classifications correspond to a plurality of categories, wherein each of the plurality of categories may have a successive relationship to one another, as described in greater detail herein.

Typically, the screen 16 is in communication with the memory storage device 12, such that an image is displayed on the screen 16 that corresponds to at least one of the plurality of music data files. The processor 14 is in communication with the memory storage device 12, and performs a plurality of steps in order to access at least a portion of the plurality of music data files from the memory storage device 12 based upon at least one category and a classification of the music data files. According to one embodiment, the memory storage device 12 and the processor 14, screen 16, a control 18, a speaker 20, or a combination thereof are housed as a single unit, such that the memory storage device 12 is internal. According to an alternate embodiment, the memory storage device 12 can be separate or external from the processor 14, screen 16, control 18, and speaker 20, such that, but not limited to, the music data files are selected from the external database, a universal serial bus (USB) memory device, a secure digital (SD) card, or the like, and played through a vehicle's stereo or audio system.

According to one embodiment, the plurality of categories in successive relationship include a genre category, an artist category, an album category, and a song category, and the plurality of classifications that are used to select the plurality of music data files on the memory storage device 12 correspond to the genre category, artist category, album category, and song category. The successive relationship of the categories allows for a command to be entered, such that any one of the categories below the currently selected category can be selected. According to one embodiment, if a category is selected that is higher or above the previously selected category, then the screen 16 can display substantially all of the classifications associated with the music files that correspond to the selected category. Thus, the categories have a hierarchical relationship, but the categories do not have to be selected in a strict hierarchical relationship, such that the artist category must be selected after the genre category. For purposes of explanation and not limitation, the album or song categories can be selected after the genre category, according to one embodiment. When a category is selected, whether as a subsequent category selection in the successive relationship or independently of all other categories, the music data files are displayed in an alphabetical listing of the selected categories. Additionally, each music data file has a classification that corresponds to each of the categories, with which the music data files can be later recalled or selected by any of the classifications.

According to one embodiment, the media system 10 can include a control 18, a microphone 20, a touch screen, the like, or a combination thereof. The control 18 and microphone 20 are typically used as human machine interface (HMI) input devices to receive commands for selecting the music data files, as described in greater detail below.

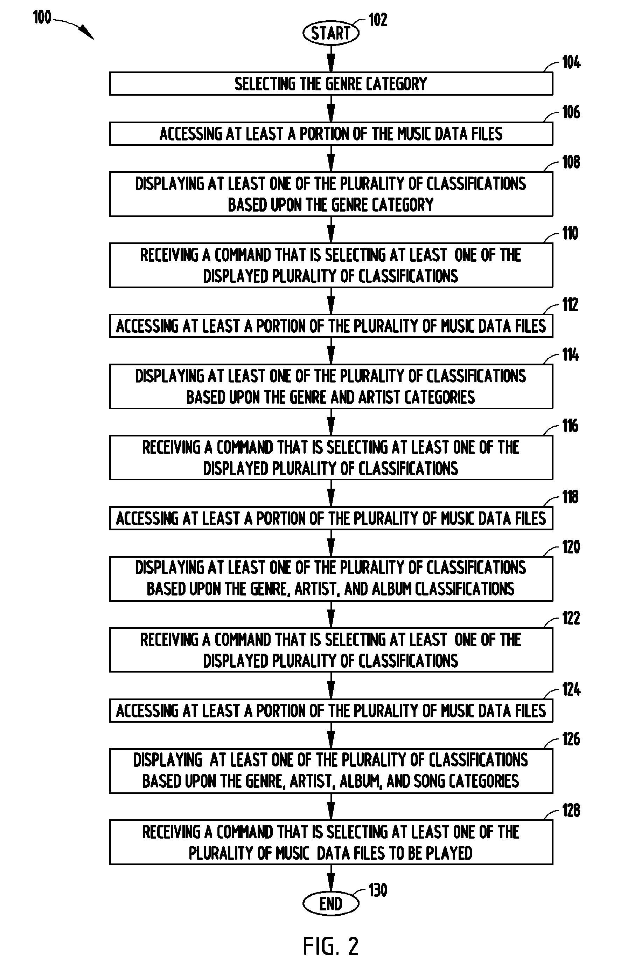

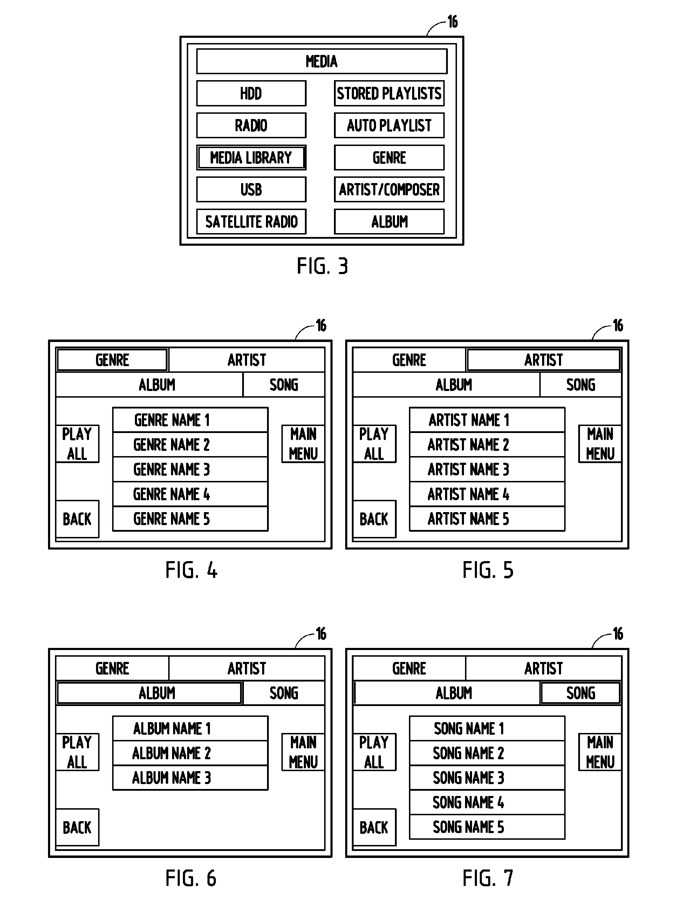

With particular reference to Figs. 1-2, a method of selecting music data files is generally shown in Fig. 2 at reference identifier 100. According to one embodiment, the music data files are accessed by a user navigating through a plurality of menu options. The method 100 starts at step 102, and proceeds to step 104, wherein the genre category is selected. Typically, the screen 16 displays a main menu (Fig. 3), wherein a command, such as, but not limited to, "Media Library," can be selected in order to access the plurality of music data files on the memory storage device 12 based upon the classification corresponding to the highest or first category in the successive group of categories. According to one embodiment, the genre category is the first category in the successive relationship of the plurality of categories, and thus, at least a portion of the music data files is selected or accessed based upon a genre classification of the music data files at step 106. Each genre classification can represent more than one music data file, if multiple music data files have the same genre classification.

At step 108, at least one of the classifications based upon the genre category is displayed, wherein the classifications can correspond to any number of the plurality of music data files accessed from the memory storage device 12. Thus, the plurality of music data files are displayed based upon a classification associated with each music data file that corresponds to the genre category (Fig. 4). For purposes of explanation and not limitation, if the music data files are songs, and four songs are all classified under the same genre, then the image displayed on the screen 16 will include the single genre that represents the four songs all having the same genre classification.

The method 100 then proceeds to step 110, wherein the media system 10 receives a command to select at least one of the displayed classifications. By way of explanation and not limitation, when one of the genre classifications is selected that is associated with at least one music data file, such that at least a portion of the plurality of music data files having the selected genre classification is selected and displayed, according to one embodiment. Additionally or alternatively, when multiple classifications are selected, such as, but not limited to, multiple genre classifications, at least a portion of the plurality of music data files is selected and displayed that have one or more of the selected classifications. The command can be received using the control 18, a voice command using the microphone 20, a manual command using the screen 16, wherein the screen 16 is a touch activation screen, the like, or a combination thereof.

In one embodiment, the artist category is the next category in the successive relationship of the plurality of categories after the genre category, such that the artist category is below the genre category in the successive relationship. When one of the genre classifications is selected, the method 100 then proceeds to step 112, wherein at least a portion of the music data files are accessed or selected from the memory storage device 12 based upon the received command. At step 114, at least one of the plurality of classifications based upon the genre and artist categories is displayed on the screen 16 (Fig. 5). Thus, the artist classification that is associated with the music data files is displayed on the screen 16, but the classifications related to the music data files have been limited based upon the selected genre classification. According to one embodiment, more than one music data file can have the same classification with respect to the artist category, such that each artist classification displayed on the screen 16 can correspond to a plurality of music data files.

The method 100 then proceeds to step 116, wherein the memory storage device 12 receives a command to select at least one of the displayed plurality of classifications. At least a portion of the plurality of music data files is accessed or selected based upon the command at step 118. According to one embodiment, the album category is the next category in the successive relationship of the plurality of categories after the artist category, such that the album category is below the genre and artist categories in the successive relationship. At step 120, at least one of the plurality of classifications based upon the genre, artist, and album classifications is displayed on the screen 16 (Fig. 6). Thus, the album classification associated with the music data files is displayed on the screen 16, but the selected music data files are limited based upon the previously selected genre and artist classifications. According to one embodiment, more than one music data file can have the same classification with respect to the album category, such that each album classification displayed on the screen 16 can correspond to multiple music data files.

A command is received that is selecting at least one of the displayed plurality of classifications at step 122. At step 124, at least a portion of the plurality of music data files are accessed or selected based upon the received command. According to one embodiment, the song category is the next category in the successive relationship of the plurality of categories after the album category, such that the song category is below the genre, artist, and album categories in the successive relationship. At step 126, at least one of the plurality of classifications based upon the genre category, the artist category, the album category, and the song category is displayed on the screen 16 (Fig. 7). Typically, only a single music data file is associated with the displayed song classification. At step 128, the media system 10 receives a command that is selecting at least one of the plurality of music data files to be played, and the method 100 then ends at step 130.

According to one embodiment, during the method 100, a user of the media system 10 can skip or pass over one or more of the categories in successive relationship. Thus, the selected category is any category that is below the currently selected category in the successive relationship. By way of explanation and not limitation, when the plurality of music data files are displayed based upon the genre classification (Fig. 4), a user can select the album or song tab or icon displayed on the top of screen 16 (Figs. 4-7) so that the plurality of music data files will be displayed based upon the album or song classification associated with the music data file. However, the successive relationship of the plurality of categories should be maintained. Thus, if the plurality of music data files are displayed on the screen 16 based upon the genre classification (Fig. 4), and a genre classification is selected, such that a portion of the plurality of music data files is selected using the artist classification (Fig. 5), a user can select the album tab or icon in order to display the plurality of music data files based upon the associated album classification based upon the selected genre classification only. However, once an album classification is selected, the user cannot select the artist tab or icon to display the plurality of music data files based upon the artist classification, and maintain the previously accessed music data files, since the artist category is above the album category in the successive relationship. Thus, if a selected category is above a previously selected category in the successive relationship, then substantially all of the classifications associated with the selected category are displayed, without regard to the previously selected categories.

According to a disclosed embodiment, the media system 10 can include a main menu command, which allows the user to return to the main menu from any displayed screen. A back command can also be included in the media system 10, such that the user can return to the previously displayed screen, according to one embodiment. Additionally or alternatively, a play all command can be included in the media system 10, so that when the plurality of music data files are displayed based upon the different classifications (Figs. 4-7), all of the music data files will be played, which are shown or represented based upon the displayed classifications. According to one embodiment, the genre tab, artist tab, album tab, song tab, the like, or a combination thereof are highlighted after a classification has been selected from the category to indicate that the displayed classifications have been filtered based upon the highlighted categories.

By way of explanation and not limitation, in operation, a user selects the "Media Library" icon (Fig. 3) to command the media system 10 to display the available genres. Thus, the screen 16 can display Soft Rock, Rap, Classic Country, Today's Country, or Classical genres, such that music data files are selected that have a classification associated with one of the above genres. The user can then select a genre, such as Today's Country, and the screen 16 will display artist classifications for the music data files based upon the selected Today's Country genre selection. For example, the screen 16 can display Kenny Chesney, Carrie Underwood, and Tim McGraw. The user can then select Kenny Chesney, and the screen 16 will display the albums based upon the classification of the stored music data files, such as "The Road and the Radio" and "Greatest Hits." When a command is received selecting an album, the available music data files are displayed by the song classification, such as "You Save Me" and "You Had Me At Hello." However, the user can choose a category that is below the currently selected category in the successive relationship, as set forth herein.

Advantageously, the system 10 and method 100 select music data files, which allows a user to navigate through the plurality of music data files in an efficient manner. By way of explanation and not limitation, in operation, the media system 10 can be used with a vehicle, such that the music data files are audio or song files that are played using the vehicle's audio system and a driver of the vehicle can efficiently navigate through the stored music data files. The user can determine to use the exact order of the successive relationship of the plurality of categories, or skip a portion of the plurality of categories while maintaining the successive relationship in order to navigate through the plurality of music data files in a desired manner. Further, by having a plurality of classifications associated with each of the plurality of music data files, the plurality of music data files can be displayed in different ways in order for the user to make the desired selections.

The above description is considered that of preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A method (100) of accessing music data files having multiple classifications, said method (100) comprising the steps of:
providing a plurality of music data files selected based upon a plurality of classifications that correspond to a plurality of categories having a successive relationship to one another;
selecting (104) a first category of said plurality of categories;
selecting (106) at least a portion of said plurality of music data files based upon said first category;
displaying (108) at least one of said plurality of classifications associated with said selected music data files that corresponds to said first category;
receiving a command (110) to select at least one of said displayed classifications;
selecting (112) at least a portion of said plurality of music data files based upon said selected at least one classification and a second category of said plurality of categories that is any one of said plurality of categories below said first category in said successive relationship of said plurality of categories; and
displaying (114) at least one of said plurality of classifications associated with said selected music data files, wherein said displayed classifications are based upon said first category, said second category, and said selected classification.

2. The method (100) of claim 1 further comprising the step of receiving (116) a second command to select one of said plurality of classifications and selecting (118) at least a portion of said plurality of music data files based upon said selected classification and a third category of said plurality of categories that is any one of said plurality of categories below said first and second categories in said successive relationship of said plurality of categories.

3. The method (100) of claim 2 further comprising the step of displaying (120) at least one of said plurality of classifications associated with said selected music data files, wherein said displayed classifications are based upon said first category, said second category, said third category, and said selected classification.

4. The method (100) of claim 3 further comprising the steps of receiving (122) a third command to select one of said plurality of classifications, selecting (124) at least a portion of said plurality of music data files based upon said selected classification and a fourth category of said plurality of categories that is any one of said categories below said first, second, and third categories, and displaying (126) said classification for each of said second selected music data files, wherein said displayed classification corresponds to one of said plurality of categories that is below said third selected category in said successive relationship of said plurality of categories.

5. The method (100) of claim 1 further comprising the step of accessing and playing (128) said selected music data files.

6. The method (100) of claim 1 further comprising the step of receiving a command so that said screen displays one of a main menu screen, previously displayed classifications on a screen, and if a selected category is above a previously selected category in said successive relationship, then displaying substantially all of said plurality of classifications associated with said music files that correspond to said selected category.

7. The method (100) of claim 1, wherein said plurality of categories in said successive relationship comprise a genre category, an artist category, an album category, and a song category.

8. The method (100) of claim 1, wherein said method is implemented using a media system (10), and said media system (10) is used with a vehicle.

9. A media system (10) that executes at least one software routine, comprising:
a memory storage device (12), wherein a plurality of music data files are accessed from said memory storage device (12) based upon a plurality of classifications that correspond to a plurality of categories, and each of said plurality of categories has a successive relationship to one another;
a screen (16) that displays at least one of said plurality of classifications that corresponds to at least one of said plurality of music data files; and
a processor (14) in communication with said memory storage device (12), wherein said processor (14) performs the steps comprising of:
selecting (104) a first category of said plurality of categories;
selecting (106) at least a portion of said plurality of music data files based upon said first category;
displaying (108) at least one of said plurality of classifications associated with said selected music data files on said screen (16) that corresponds to said first category;
receiving a command (110) to select at least one of said displayed classifications;
selecting (112) at least a portion of said plurality of music data files based upon said at least one selected classification and a second category of said plurality of categories that is any one of said plurality of categories below said first category in said successive relationship of said plurality of categories; and
displaying (114) at least one of said plurality of classifications associated with said selected music data files, wherein said displayed classifications are based upon said first category, said second category, and said selected classification.

10. The system (10) of claim 9, wherein said plurality of categories in said successive relationship comprises a genre category, an artist category, an album category, and a song category.

11. The system (10) of claim 9, wherein said received command is at least one of a touch screen command, a controller (16) command, and a voice command.

12. The system (10) of claim 9, wherein said steps performed by said processor (18) further comprise receiving (116) a second command to select one of said plurality of classifications and selecting (118) at least a portion of said plurality of music data files based upon said selected classification and a third category of said plurality of categories that is any one of said plurality of categories below said first and second categories in said successive relationship of said plurality of categories.

13. The system (10) of claim 12, wherein said steps performed by said processor (18) further comprise displaying (120) at least one of said plurality of classifications associated with said selected music data files, wherein said displayed classifications are based upon said first category, said second category, said third category, and said selected classification.

14. The system (10) of claim 9, wherein said steps performed by said processor (18) further comprise accessing and playing (128) said selected music data files.

15. The system (10) of claim 9, wherein said steps performed by said processor (18) further comprise receiving a command so that said screen (16) displays one of a main menu screen, previously displayed classifications on said screen (16), and if a selected category is above a previously selected category in said successive relationship, then displaying substantially all of said plurality of classifications associated with said music files that correspond to said selected category.

16. The system (10) of claim 9, wherein said media system (10) is used with a vehicle.
